# EUROPEAN PATENT APPLICATION

(11) **EP 3 549 652 A1**
(43) Date of publication of application: **09.10.2019**
(21) Application number: 19397511.7
(22) Date of filing: 04.04.2019
(51) Int. Cl.: B01D 29/64, B02C 18/00, B65F 1/00, E03F 5/14, E04F 17/10

(54) **A BIO-WASTE COLLECTION SYSTEM AND AN INTERMEDIATE CONTAINER FOR THE BIO-WASTE COLLECTION SYSTEM**

(30) Priority: 04.04.2018 FI 20185314
(71) Applicant: Salonen, Jouni, 33820 Tampere (FI); Salonen, Joonas, 33560 Tampere (FI)
(72) Inventor: Salonen, Jouni, 33820 Tampere (FI); Salonen, Joonas, 33560 Tampere (FI)
(74) Representative: Berggren Oy, Tampere

(57) **Abstract**

The invention relates to an intermediate container (100, 300, 500) for a bio-waste collection system comprising a container (101, 301, 501), an inlet (103) for crushed bio-waste, a perforated sloped base (102) inside the container and tilted downwards in the propagation direction of the crushed bio-waste, a first outlet (104), which is a drain outlet underneath the perforated sloped base for the filtered fluid, and a second outlet (105) for non-filtered bio-waste moved over the perforated sloped base, that is connected to a bio-waste container (553). The invention relates to a bio-waste collection system comprising an intermediate container.

## Description

### Background

Biogas production needs biodegradable feedstocks like inedible bio-waste from shops, bio-waste from households, communities, schools and restaurants, commercial garden waste, as well as many other types of biodegradable fractions. Biodegradable feedstocks are transported to a biogas plant where biogas is produced from them. Upgraded biogas is composed of odorless methane that is lighter than air and it is clean, environmentally friendly energy. Biogas is used as gas vehicle fuel, energy for product manufacture, in heat and power production as well as in restaurants and homes.

There is a need to improve the efficiency of bio-waste collection from households, communities, schools and restaurants, and therefore, there is a need for a solution that enables easier and more user-friendly collection of bio-waste.

### Summary

Now there has been invented an improved technical equipment and a system, by which a user-friendly and efficient bio-waste collection can be provided. Various aspects of the invention include an intermediate container for a bio-waste collection system and a bio-waste collection system, which are characterized by what is stated in the independent claims. Various embodiments of the invention are disclosed in the dependent claims.

According to a first aspect, there is provided an intermediate container for a bio-waste collection system, wherein the intermediate container comprises a container, an inlet for crushed bio-waste, a perforated sloped base inside the container and tilted downwards in the propagation direction of the crushed bio-waste, a first outlet, which is a drain outlet underneath the perforated sloped base for the fluid filtered through the perforations from the crushed bio-waste moving over the perforated sloped base on its way to a bio-waste container of the bio-waste collection system, and a second outlet for non-filtered bio-waste flowed/moved over the perforated sloped base, that is connected to the bio-waste container.

According to an embodiment, the intermediate container further comprises a refining system comprising a refining plate and an electric motor, which refining plate is electrically connected to the electric motor that is arranged to move the refining plate from the first side to the second side and back along the sloped perforated base. According to an embodiment, the perforated sloped base is between the inlet and the second outlet. According to an embodiment, the intermediate container further comprises a flushing connection through which flushing liquid is fed to the intermediate container. According to an embodiment, the intermediate container further comprises a manhole on top of the intermediate container, wherein the manhole comprises a cover. According to an embodiment, the perforated sloped base comprises several circular perforations having a diameter of 2-3cm. According to an embodiment, the perforated sloped base has a drop of 1 to 2 cm per meter.

According to a second aspect, there is provided a bio-waste collection system comprising a bio-waste mill for crushing bio-waste, a bio-waste drain for crushed bio-waste, an intermediate container according to a first aspect and its embodiments, a drain connection, a drain and a bio-waste container. The bio-waste drain is arranged between the bio-waste mill and the intermediate container. Through the bio-waste drain the crushed bio-waste is arranged to move to the intermediate container, wherein fluid is filtered from the crushed bio-waste to the drain connection arranged below the perforated base of the container, and onwards to the drain. The non-filtered part of the crushed bio-waste flows from the intermediate container to the bio-waste container.

According to an embodiment, the intermediate container is arranged to receive crushed bio-waste from at least two bio-waste mills through a bio-waste drain. According to an embodiment, the bio-waste mill is arranged under a first sink for receiving bio-waste to be crushed by the bio-waste mill. According to an embodiment, the bio-waste collection system further comprises a second sink for water and other liquids that is connected to the drain. According to an embodiment, the bio-waste collection system is in common for at least two buildings. According to an embodiment, the bio-waste collection system further comprises a separate intermediate container for each building. According to an embodiment, the bio-waste collection system comprises only one intermediate container for the at least two buildings.

### Description of the Drawings

In the following, various embodiments of the invention will be described in more detail with reference to the appended drawings, in which
- Fig. 1: shows a cross-sectional view of an intermediate container for a bio-waste collection system according to an example embodiment of the invention;
- Fig. 2a, b: show a perforated base of an intermediate container of a biowaste collection system from above according to an example embodiment of the invention;
- Fig. 3: shows a cross-sectional view of an intermediate container comprising a refining system according to an example embodiment of the invention;
- Fig. 4a, b, c: show a refining system and a perforated sloped base of an intermediate container according to an example embodiment of the invention;
- Fig. 5 a, b, c: show a bio-waste collection system according to an example embodiment of the invention; and
- Fig. 6: shows a part of a bio-waste collection system according to an example embodiment of the invention.

### Description of Example Embodiments

A bio-waste mill is an electrically operated gadget fitted permanently below a kitchen sink. The term "bio-waste mill" covers all devices suitable to be fixed underneath kitchen sink for crushing waste, for example, bio-waste fed to it. Such a device may be, for example, a food waste mill, a waste disposer, a food waste grinder, a food waste treatment apparatus, etc. When the bio-waste mill is switched on and the tap is opened, get food wastes like bones, eggshells, leftover food, vegetable and fruit peels, banana leaves etc. crushed into fine particles and drain down a bio-waste drain. The bio-waste drain is a drain line that is a hollow pipe, which is arranged to convey the crushed bio-waste from the bio-waste mill to an intermediate container, wherein fluid is filtered from the crushed bio-waste to a drain connection under the intermediate container. The drain connection is connected to a main drain raking liquids out of a house to sewerage network. The un-filtered part of the bio-waste i.e. more solid bio-waste i.e. organic solid material flows to a bio-waste container for waiting emptying i.e. collecting of the bio-waste and transporting to a biogas plant where biogas is produced from them. As fluid part of the bio-waste is conveyed to the drain connection, the bio-waste container can store more organic solid material, which also requires less space than the usual non-separated organic waste, which means that the emptying intervals increases. Further, drier organic solid material is lighter burnable. In addition, solid bio-waste in the bio-waste container may smell less, because the fluid may not ferment.

There is a pitch in a drain, for example, in a bio-waste drain, a drain connection and/or a main drain, and in a base of an intermediate container. Pitch is the angle in which waste, for example, crushed bio-waste or liquids, will flow easily and gradually with the help of gravity. Every drain, whether underground or in a wall, and the base of the intermediate container have some type of pitch and they slope properly to allow waste leaving the building to drain out. To ensure that waste will drain properly and won't back up in the line, is to arrange a drop of at least 1 cm per meter to a drain and/or to a base of an intermediate container i.e. the drainpipes and the bottom plate of the intermediate container are sloped. The drop of a drain may also be bigger, for example, 2, 3, or up to 10 cm per meter, the drain may also be in the vertical position. The possible diameter of pipes of drains is, for example, 10 cm, but it may also be less, for example, 8 cm, or more, for example, up to 25 cm. The drop of the sloped base of the container may also be, for example, 1 to 2 cm, but also 4, 5, or up to 10 cm per meter, but the purpose of the drop of the base is that bio-waste does not flow too fast or slow over the perforated base of the intermediate container. If bio-waste flows too fast, it is possible that the fluid part of the bio-waste may not be filtered to a drain connection through perforations i.e. openings of the perforated sloped base. But it should also be noted that, if the drop of the perforated sloped base of the intermediate container is too small, it is possible that the bio-waste does not flow over the perforated base, but it gets stacked on the base. In other words, drains and a base of an intermediate container are inclined so that the end of the propagation direction of the crushed bio-waste (or liquid/fluid/water) is lower than the direction of incidence of the crushed bio-waste (or liquid/fluid/water).

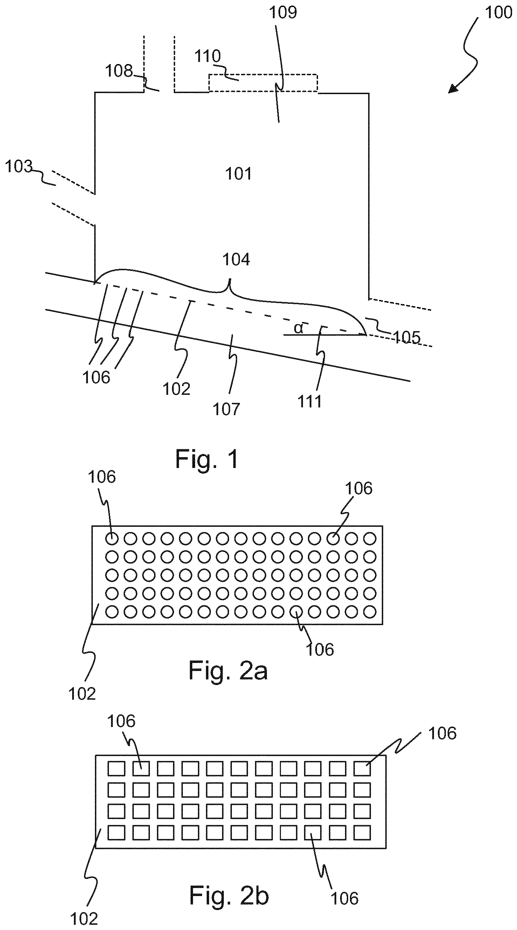

In the following, several embodiments of the invention will be described in the context of figures 1 to 6. It is to be noted, however, that the invention is not limited to shown embodiments of an intermediate containers comprising a refining system and/or a perforated sloped base and/or a bio-waste collection system. In fact, the different embodiments have applications in any environment where an intermediate container and/or a bio-waste collection system is suitable to be used.

Figure 1 shows a cross-sectional view of an intermediate container 100 of a bio-waste collection system according to an example embodiment. The intermediate container 100 is a part of a bio-waste collection system and it works, as its name refers, as a sub-container for bio-waste on its way from the bio-waste mill that crushed the bio-waste to the bio-waste container used for storing the bio-waste before it is collected and transported to a biogas plant. The intermediate container 100 is usually at least mainly arranged underground, but a part or parts of the intermediate container 100 can be overground part(s) i.e. surface part(s) or a part or parts of the intermediate container 100 may have a connection to the overground i.e. to the surface.

The intermediate container 100 comprises a container 101 itself, a perforated sloped base 102, an inlet 103 for crushed bio-waste, a first outlet 104, and a second outlet 105. The container 101 may be a solid structure made of, for example, polyethene, aluminum or some other suitable material and it is made, for example, by rotational molding. The size of the container 101 may be, for example, a few hundred liters, for example 200 - 800 liters. The sloped perforated base 102 is a bottom plate of the intermediate container 100 having a tilting angle α 111 of, for example, between 1 to 10 degrees so that the part of the bio-waste that is not filtered through perforations 106 of the perforated base 101 flows i.e. moves slightly downwards inside the intermediate container 100 along the perforated sloped base 102 to the second outlet 105. The inlet 103 for crushed bio-waste is arranged in a first side of the container 101 so that the bio-waste falls onto the perforated sloped base 102 tilted towards the bio-waste container arranged next to the container 101 and the second outlet 105 is arranged in a second side of the container 101. The first outlet 104 is connected to a drain connection 107 arranged underneath the perforated sloped base 102. There may also be perforations in the drain connection 107 in corresponding places as in the base 102 so that fluid part of the bio-waste can filter to the drain connection 107 through the perforations 106 of the base 102 and the drain connection 107 instead of entering to the bio-waste container, when the crushed bio-waste is flowing over the sloped perforated base 102 on its way towards the bio-waste container. The drain connection 107 is connected to a main drain. It is also possible that there is only one opening in the drain connection 107 underneath perforations106 of the base 102 so that fluid part of the bio-waste can filter to the drain connection 107 through the perforations 106 of the base 102 and the opening of the drain connection 107.

The intermediate container 100 may further comprise a flushing connection 108 through which flushing liquid, for example, water, can be fed to the container 101. Flushing can be performed, for example, if the crushed bio-waste jams on the base 102 or for cleaning purposes of the container 101, base 102 and/or perforations 106. The flushing connection 108 may be arranged on top of the intermediate container 100 as in this embodiment or, for example, to the upper part of the intermediate container 100. The flushing connection 108 may be arranged in a cellar of the building as well as the bio-waste collection system. The flushing connection 108 may have a cover (not shown) for preventing unintentional access of dirt etc. to the container 101.

Further, the intermediate container 100 may comprise a manhole 109 that is an access door to the container 101 for maintenance purposes. The manhole 109 may be arranged on top of the intermediate container 100 as in this embodiment or, for example, to the upper part of the intermediate container 100. The manhole 109 may have a cover 110 for preventing unintentional access of human and dirt to the container 101.

Figures 2a and 2b show a perforated base 102 of an intermediate container 100 of a bio-waste collection system from above according to an example embodiment.

Perforations 106 of the perforated base 102 of figure 2a are circular. Their diameter may be, for example 2-3cm so that the fluid part of bio-waste will be filtered through the perforations 106. Perforations 106 of the perforated base 102 of figure 2b are rectangular. Their sides may have a length, for example, 1,5-2,5 cm. The shape of perforations 106 are not restricted to shown forms, but they may also be triangular, elliptical, hexagonal etc. But the size of the perforations 106 are measured so that fluid part of the bio-waste actually filters through them, but not the solid part of the bio-waste i.e. perforations should not be too big. In addition, the base 102 should have an adequate number of perforations 106 so that fluid part of the bio-waste actually filters through them and does not just flow along the base 102.

The perforated bases 102 of figure 2a and 2b may be made of, for example, steel, aluminium or some other suitable material.

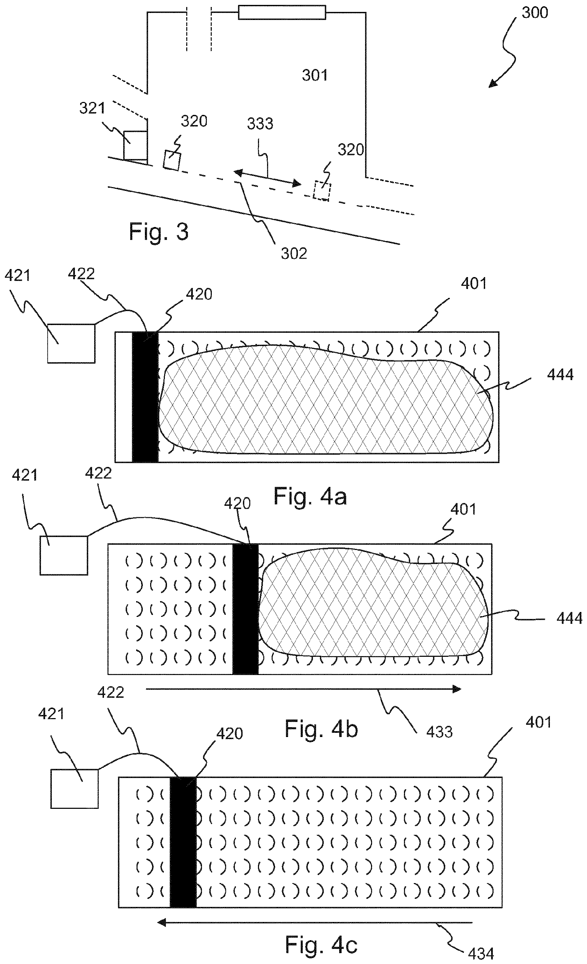

Figure 3 shows a cross-sectional view of an intermediate container 300 of a bio-waste collection system according to an example embodiment of the invention. The intermediate container 300 of this embodiment further comprises a refining system comprising a refining plate 320 and an electric motor 321. The refining plate 320 is electrically connected to the electric motor 321 that is arranged to move the refining plate 320 from a first side of a container 301 of the intermediate container 300 to the second side the container 301 and back along a perforated sloped base 302 inside the container 301 of the intermediate container 300. The directions of the motion of the refining plate 320 is indicated by an arrow 333. The electric motor 321 may be arranged outside the container 301, but it may also possible to arranged it inside the container 301.

The electric motor 321 may be battery operated or it may be connected to mains. The refining system, for example, the motor 321, may comprise a start button, so that it possible to start the cleaning of the base by pushing the button. In addition, the refining system may be remote controlled by a remote controller. The remote controller controlling the remotely controllable refining system may be, for example, any device capable of transmitting wireless control signals to the refining system. The remote controller comprises a transmitter. The transmitter may comprise a microprocessor chip which is connected to a battery of the remote controller, an RF transmitter or a Bluetooth wireless transmitter with an antenna, and a control circuitry for transmitting control signals to the receiver of the refining system. The remote controller thus transmits control signals, for example, over a short range radio connection, a long range radio connection a Bluetooth connection or a low-power consumption Bluetooth connection to the motor of refining system. The remote controller and the remotely controllable refining system have the like devices for transmitting/receiving control signals, for example, both use RF, Bluetooth or low-power consumption Bluetooth connection. Alternatively, the refining system may operate automatically. It may operate periodically, for example, once a day, every other day or once a week.

Figures 4a, 4b, and 4c show an example of a refining system and a perforated base 401 of an intermediate container according to an example embodiment. The refining system comprises a refining plate 420 and an electric motor 421. The refining plate 420 is electrically connected 422 to the electric motor 421 that is arranged to move the refining plate 420 along the perforated base 402 from a first side of the perforated base 401 to a second side the perforated base 401 and back and inside a container of an intermediate container. The perforated base 402 is in tilted position i.e. sloped inside the container. The refining plate 420 may be made, for example, of plastic, silicone, aluminum or any other suitable material.

In figure 4a, the refining plate 420 is in its starting point i.e. home position, which means that it is in the first end of the perforated base 401 and it has not been currently used or is not in use, and there is crushed bio-waste 444 jammed on the perforated base 401.

In figure 4b, the refining plate 420 is in the middle of cleaning process, which means that it is between the first and second end of the perforated base 401 and the part of the bio-waste 444 that was jammed on the area of the first end of the perforated base 401 has now been cleaned i.e. pushed toward the second end, but the part of the bio-waste 444 that is jammed on the area of the second end of the perforated base 401 has not yet been cleaned. The current direction of the motion of the refining plate 420 is indicated by an arrow 433.

In figure 4c, the refining plate 420 has ended the cleaning process, which means that the refining plate 420 is on its way back to its starting point. The bio-waste 444 that was jammed on the perforated base 401 has now been cleaned. The current direction of motion of the refining plate 420 is indicated by an arrow 434.

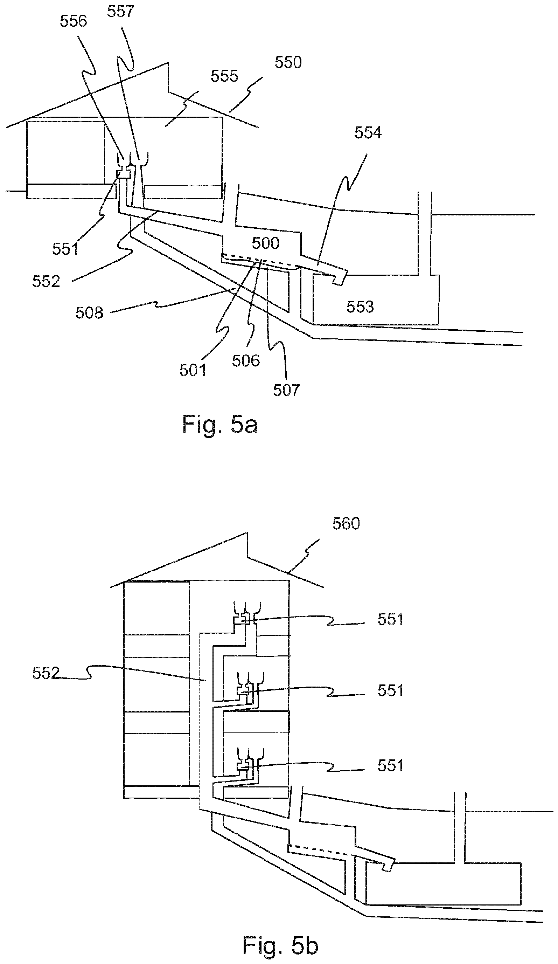

Figure 5a shows a bio-waste collection system according to an example embodiment. The bio-waste collection system is arranged in a single-family house 550. The bio-waste collection system comprises a bio-waste mill 551 that is fixed under a first sink 556 of a kitchen 555 of the house 550 for crushing bio-waste, a bio-waste drain 552 for crushed bio-waste, an intermediate container 500, a main drain 508, a drain connection 507 connected to the main drain 508, and a bio-waste container 553. The bio-waste drain 552 is connected between the bio-waste mill 551 and the intermediate container 500. The crushed bio-waste is arranged to flow from the bio-waste mill 551 to the intermediate container 500 through the bio-waste drain 552. Inside the intermediate container 500, the fluid part of the crushed bio-waste is arranged to be filtered through perforations 506 of a perforated sloped base 501 to the drain connection 507 extending below the perforated sloped base 501 of the intermediate container 500, when the crushed bio-waste moves along the sloped perforated base 501 inside the intermediate container 500. The moving is caused by gravity. The drain connection 507 may comprise at least one opening or a plurality of openings in its upper side i.e. underneath the perforated base 501 so that the fluid can flow through the perforations 506 of the perforated base 501 to the drain connection 507 and along the drain connection 507 to the main drain 508 and further to a sewerage network. The main drain 508 is connected to a second sink 557 in the kitchen of the house 550 and through it water and other liquids fed to the second sink 557 will flow to the sewerage network without going to or through the intermediate container 500.

The non-filtered part of the crushed bio-waste i.e. the solid or at least less liquid part of the crushed bio-waste enters from the intermediate container 500 to the bio-waste container 553 through a connection line 554, for example, a connection tube/pipe between the intermediate container 500 and the bio-waste container 553. The size of the bio-waste container 553 may be, for example, 5000-10 000 liters, for example, 8 000 liters. The bio-waste container 553 is usually arranged underground, but it comprises an emptying pipe on top or on the side of the bio-waste container 553 so that it is possible to empty the non-filtered part (solid part) of the crushed bio-waste from the bio-waste container 553 by a vehicle comprising a suction device or some other means suitable for emptying the bio-waste container 553.

Figure 5b shows a bio-waste collection system according to an example embodiment of the invention. The bio-waste collection system is arranged in an apartment building 560 comprising several apartments, in this embodiment three. The bio-waste collection system comprises a bio-waste mill 551 connected under a first sink of each or at least part of the kitchens of the building 560 for crushing bio-waste, a bio-waste drain 552, an intermediate container 500, a main drain 508, a drain connection 507 connected to the main drain 508, and a bio-waste container 553. The bio-waste drain 552 is connected between the bio-waste mills 551 and the intermediate container 500. The crushed bio-waste is arranged to flow from each bio-waste mill 551 to the intermediate container 500. Each bio-waste mill 551 has its own bio-waste drain line 552a, 552b, 552c and each of the drain lines 552a, 552b, 552c is tied into the bio-waste drain 552, which takes the crushed bio-waste out of the house 560 and to the intermediate container 500. The bio-waste drain 552 may have a bigger diameter than a diameter of a bio-waste drain line 552a, 552b, 552c, but not necessarily. It is also possible to say that there is just a branched bio-waste drain, instead of saying that there is a bio-waste drain and a bio-waste drain line or lines.

In the intermediate container 500 fluid part of the crushed bio-waste is filtered through perforations 506 to the drain connection 507 arranged under the perforated sloped base 501 of the intermediate container 500 when the crushed bio-waste moves along the sloped perforated base 501, inside intermediate container 500, due to the gravity. The drain connection 507 may comprise at least one opening or a plurality of openings in its upper side so that the fluid can flow through the perforations 506 of the perforated base 501 to the drain connection 507 and along the drain connection 507 to the main drain 508 and further to a sewerage network. The main drain 508 is also connected to second sinks 557 in the kitchens of the house 560 and through the main drain 508 water and other liquids that are fed to a second sink 557 flow directly to the sewerage network without going to the intermediate container 500. The non-filtered part of the crushed bio-waste i.e. the solid or at least less liquid part of the crushed bio-waste moves from the intermediate container 500 to the bio-waste container 553 through a connection line 554, for example, a connection tube between the intermediate container 500 and the bio-waste container 553. The bio-waste container 553 is usually arranged underground, but it comprises an emptying pipe on top or on the side of the bio-waste container 553 that is connected to the surface of ground so that the non-filtered part of the crushed bio-waste can be emptied from the bio-waste container 553 by a vehicle comprising a suction device or some other means suitable for emptying the bio-waste container 553.

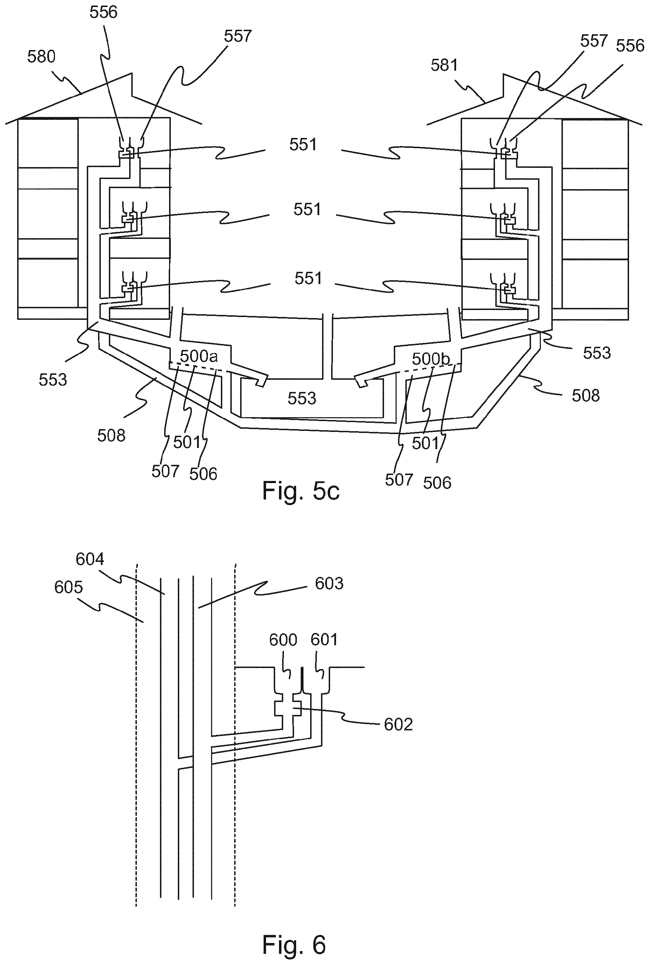

Figure 5c shows a bio-waste collection system according to an example embodiment of the invention. The bio-waste collection system of this embodiment is a common system for two apartment buildings 580, 581 both comprising several apartments, in this embodiment three. It is also possible that one bio-waste collection system is common for more than two buildings, for example, 3 to 10 or even more. The size of bio-waste container may be increased, if the number of buildings increases.

The bio-waste collection system of figure 5c comprises a bio-waste mill 551 for crushing bio-waste under first sinks 556 of kitchens of the buildings 580, 581, a bio-waste drain 552 for crushed bio-waste in both buildings 580, 581, two intermediate containers 500a, 500b i.e. one for each house 580, 581, a drain connection 507 for both intermediate containers 500 and a common bio-waste container 553. It should be noted that it is also possible that there is only one common intermediate container for two or more buildings. This is convenient, if there is only little space.

Back to the figure 5c; a first bio-waste drain 552a is arranged between bio-waste mills 551 of the first building 580 and the intermediate container 500a of the first building 580 and a second bio-waste drain 552b is arranged between bio-waste mills 551 of the second building 581 and the intermediate container 500b of the second building 581. The crushed bio-waste is arranged to move from each bio-waste mills 551 to one of the intermediate containers 500a or 500b.

From the intermediate containers 500a, 500b fluid parts of the crushed bio-waste are again filtered to drain connections 507 arranged below the intermediate containers 500a, 500b when the crushed bio-waste moves along the sloped perforated bases inside intermediate containers 500 due to gravity. Each drain connection 507 again comprises at least one opening or a plurality of openings in its upper side so that the fluid can filter through the perforations 506 of the perforated bases 501 to the drain connections 507 and move along the drain connections 507 to the main drain 508 and further to a sewerage network. The main drain 508 is also connected to second sinks 557 of the kitchens of the buildings 580, 581 and through the main drain 508 water and other liquids fed to a second sink 557 flow directly to the sewerage network without going to the intermediate container 500a, 500b.

The non-filtered parts of the crushed bio-waste moves from the intermediate containers 500a, 500b to the bio-waste container 553 through connection lines, for example, connection tubes, between the intermediate container 500a, 500b and the bio-waste container 553.

Figure 6 shows an example, of a part of a bio-waste collection system arranged inside a building according to an embodiment. This shown part comprises a first sink 600, a second sink 601, a bio-waste mill 602 under the first sink 600, a bio-waste drain 603, and a drain 604 (for example, a main drain). The bio-waste mill 602 is connected above the first sink 601 so that when the bio-waste mill 602 is switched on, and a tap on the bottom of the first sink 600 is opened, food wastes like bones, eggshells, leftover food, vegetable and fruit peels, banana leaves etc. are crushed into fine particles i.e. to crushed bio-waste. The crushed bio-waste drains down i.e. moves to the bio-waste drain 603. Whereas, the drain 604 that is connected and fixed to the second sink 601, usually underneath the second sink 60, is used for supplying not only liquids fed to the second sink 60 to a sewerage network, but in the later part of the bio-waste collection system also the fluid part of the bio-waste fed to the first sink 600, when the fluid part of the bio-waste is filtered from the crushed bio-waste in an intermediate container (not shown).

The vertical parts the bio-waste drain 603 and the drain 604 of the bio-waste collection system shown in figure 6 are arranged to extend inside a pull-down corridor 605. The pull-down corridor 605 may be, for example, soundproof, which prevents the sound of drainage noise into the nearby rooms.

The various embodiments may provide advantages. The use of bio-waste mills is easy for the users, and bio-waste mills may comprise all necessary means that guarantees secure use of the mills. There is no need to collect stinking bio-waste in separate bags or containers in the kitchen and then carry the collected bio-waste into bio-waste bin outside. Furthermore, the collected bio-waste, wherefrom a fluid part of the bio-waste is filtered, is easy and non-odorous to be stored in a bio-waste container. And from the bio-waste container the bio-waste is easy to collect for further use i.e. to biogas production. Easy and safe collecting of bio-waste increases the amount of collected bio-waste, which, in turn, increases the amount of biogas raw material and the amount of produced biogas, and decreases the amount of waste exported to landfill.

It is obvious that the present invention is not limited solely to the above-presented embodiments, but it can be modified within the scope of the appended claims.

## Claims

1. An intermediate container for a bio-waste collection system, wherein the intermediate container comprises:
a container,
an inlet for crushed bio-waste in the container,
a perforated sloped base inside the container and tilted downwards in the propagation direction of the crushed bio-waste,
a first outlet in the container, which is a drain outlet underneath the perforated sloped base for the fluid filtered through the perforations from the crushed bio-waste moving over the perforated sloped base,
a second outlet in the container for non-filtered bio-waste that is connected to the bio-waste container, and
a refining system comprising a refining plate and an electric motor, which refining plate is electrically connected to the electric motor that is arranged to move the refining plate from the first side to the second side and back along the perforated sloped base.

2. An intermediate container according to claim 1, wherein the perforated sloped base is between the inlet and the second outlet.

3. An intermediate container according to claim 1 or 2, wherein the intermediate container further comprises a flushing connection through which flushing liquid is fed to the intermediate container.

4. An intermediate container according to any of claims 1 to 3, wherein the intermediate container further comprises a manhole on top of the intermediate container, wherein the manhole comprises a cover.

5. An intermediate container according to any of claims 1 to 4, wherein the perforated sloped base comprises several circular perforations having a diameter of 2-3cm.

6. An intermediate container according to any of claims 1 to 5, wherein the perforated sloped base has a drop of 1 to 2 cm per meter.

7. A bio-waste collection system comprising
a bio-waste mill for crushing bio-waste, a bio-waste drain for crushed bio-waste, an intermediate container according to any of the claims 1 to 6, a drain connection, a drain and a bio-waste container, wherein the bio-waste drain is arranged between the bio-waste mill and the intermediate container, and through which bio-waste drain the crushed bio-waste is arranged to move to the intermediate container, and wherein fluid is filtered from the crushed bio-waste inside the container to the drain connection arranged below the perforated base of the container and onwards to the drain, and wherein the non-filtered part of the crushed bio-waste flows from the intermediate container to the bio-waste container.

8. A bio-waste collection system according to claim 7, wherein the intermediate container is arranged to receive crushed bio-waste from at least two bio-waste mills through a bio-waste drain.

9. A bio-waste collection system according to claim 7 or 8, wherein the bio-waste mill is arranged under a first sink for receiving bio-waste to be crushed by the bio-waste mill.

10. A bio-waste collection system according to any of claims 7 to 9, wherein the bio-waste collection system further comprises a second sink for water and other liquids that is connected to the drain.

11. A bio-waste collection system according to any of claims 7 to 10, wherein the bio-waste collection system is in common for at least two buildings.

12. A bio-waste collection system according to claim 11, wherein the bio-waste collection system further comprises a separate intermediate container for each building.

13. A bio-waste collection system according to claim 11, wherein the bio-waste collection system comprises only one intermediate container for the at least two buildings.
